# EUROPÄISCHE PATENTSCHRIFT

(11) **EP 3 283 784 B1**
(45) Veröffentlichungstag und Bekanntmachung des Hinweises auf die Patenterteilung: **23.12.2020**
(21) Anmeldenummer: 16716543.0
(22) Anmeldetag: 13.04.2016
(51) Int. Cl.: F16D 55/22, B61H 13/36, F16D 55/227

(54) **VORRICHTUNG ZUM BEFESTIGEN EINES BREMSSATTELS**
DEVICE FOR FASTENING A BRAKE CALIPER
DISPOSITIF SERVANT À FIXER UN ÉTRIER DE FREIN

(30) Priorität: 14.04.2015 DE 102015105712
(43) Veröffentlichungstag der Anmeldung: 21.02.2018
(73) Patentinhaber: KNORR-BREMSE Systeme für Schienenfahrzeuge GmbH, 80809 München (DE)
(72) Erfinder: LEHMAIR, Martin, 80935 München (DE); NIES, Eduard, 82178 Puchheim (DE)
(86) Internationale Anmeldenummer: PCT/EP2016/058113
(87) Internationale Veröffentlichungsnummer: WO 2016/166155

(56) Entgegenhaltungen:
- EP-A1- 2 290 256
- WO-A1-2009/127008
- DE-A1- 19 745 775
- GB-A- 2 184 501
- US-A- 5 439 078

## Beschreibung

Die vorliegende Erfindung bezieht sich auf eine Vorrichtung zum Befestigen eines Bremssattels und insbesondere auf eine Vorrichtung zur Befestigung eines hydraulischen Bremssattels am Drehgestellrahmen eines Schienenfahrzeuges.

### Hintergrund

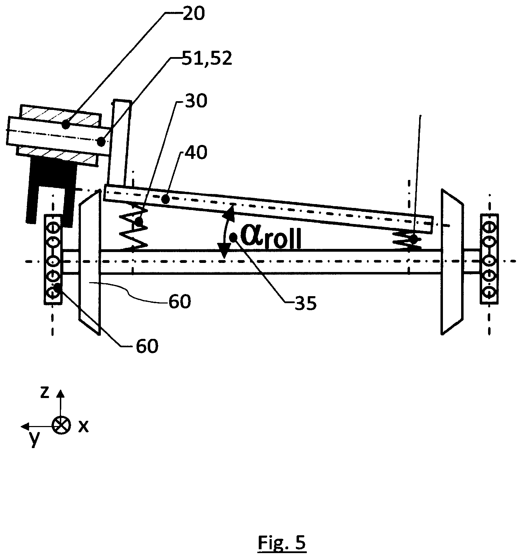

Schienenfahrzeuge wie beispielsweise eine Straßenbahn bieten häufig nur wenig Platz im Fahrzeugunterbau, um beispielsweise ein Bremssystem sicher unterzubringen. Diese Problematik soll zunächst anhand der Figuren 5-7 beispielhaft für ein Schienenfahrzeug näher erklärt werden.

Die Figur 5 zeigt eine Querschnittsansicht des beispielhaften Schienenfahrzeugs senkrecht zur Fahrtrichtung (z.B. entlang der z- und y-Richtung), wobei die Befestigung eines hydraulischen Bremssattels 20 an einem Drehgestellrahmen 40 des beispielhaften Schienenfahrzeuges (z. B. einer Straßenbahn) dargestellt ist. Der Drehgestellrahmen 40 (oder ein anderes Teil des Fahrzeugrahmens) ist gegenüber einer Bremsscheibe 60, die fest mit zumindest einem Rad 64 fest verbunden ist, bewegbar angeordnet. Beispielsweise ist der Drehgestellrahmen 40 gegenüber der Bremsscheibe 60 am Radsatz durch eine Primärfeder 30 gefedert gelagert und es ist daher insbesondere erforderlich, dass der Bremssattel relativ zur Bremsscheibe 60 Winkelbewegungen ausführen kann. Die Fig. 5 zeigt eine beispielhafter Drehung um die Fahrzeuglängsachse (z.B. x-Richtung).

Ohne darauf eingeschränkt zu sein, wird im Folgenden ein Koordinatensystem verwendet, in welchem die Drehachse des Rades in der y-Richtung liegt, die x-Richtung in Fahrtrichtung des beispielhaften Schienenfahrzeuges zeigt und die z-Richtung sich entgegengesetzt zur Höhenrichtung des Schienenfahrzeuges erstreckt.

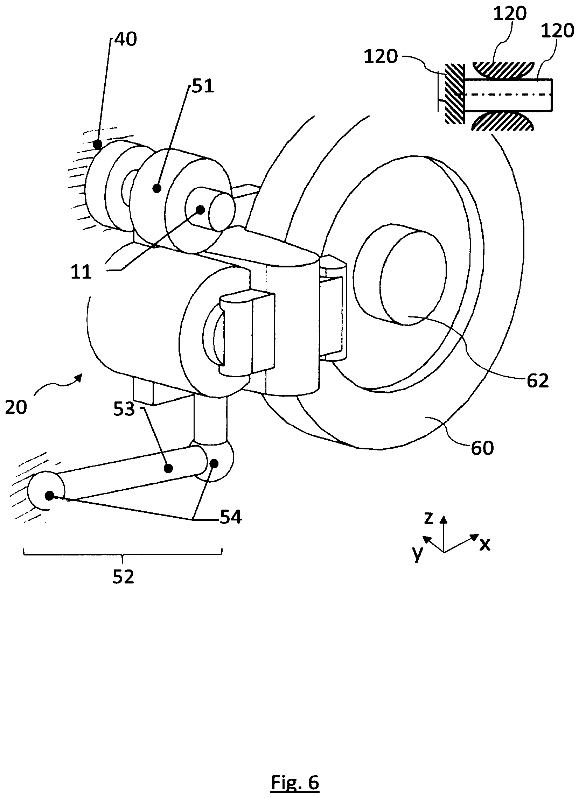

Die Figur 6 veranschaulicht weitere Details für die Anbringung des Bremssattels 20 an dem Drehgestellrahmen 40. Insbesondere umfasst die Bremssattelbefestigung eine erste Halterung 51 und eine zweite Halterung 52. Die erste Halterung 51 hält den Bremssattel 20 relativ zu einem ersten Bolzen 11, der fest mit dem Drehgestellrahmen 40 verbunden ist. Die zweite Halterung 52 umfasst eine Stützstange 53, die sich zwischen zwei Kugelgelenklager 54 erstreckt, wovon das eine fest mit dem Drehgestellrahmen 40 verbunden ist und das anderen fest mit dem Bremssattel 20 verbunden ist. Die Kugelgelenklager 54 können ebenfalls als Teil der Stützstange 53 ausgebildet sein.

Die erste Halterung 51 ist in der Figur 6A vergrößert als eine Querschnittsansicht dargestellt und ist derart ausgebildet, dass alle radialen Kräfte, die von dem Bremssattel 20 radial auf dem ersten Bolzen 11 wirken, direkt auf den ersten Bolzen 11 übertragen werden. Anderseits erlaubt die erste Halterung 51 eine axiale Bewegung entlang der Längsrichtung des ersten Bolzens 11. Außerdem sind Drehbewegungen der ersten Halterung 51 relativ zu dem ersten Bolzen 11 möglich.

Die zweite Halterung 52 verbindet über zwei Kugelgelenklager 54 und der dazwischen liegenden Stützstange 53 den Bremssattel 20 derart mit dem Drehgestell 40, dass eine Bewegung entlang der Fahrzeuglängsachse (x-Richtung) verhindert wird, aber eine Bewegung entlang der Achsenrichtung einer Fahrzeugachse 62 (y-Richtung) möglich ist. Insbesondere erlaubt die Stützstangenaufhängung eine Verdrehung des Bremssattels 20 relativ zu dem Drehgestellrahmen 40 und der Bremssattel 20 kann eine Drehbewegung des Rades 60 (z. B. der Bremsscheibe) relativ zu dem Drehgestellrahmen 40, wie es in der Fig. 5 dargestellt ist, folgen.

Die Winkelbeweglichkeit des Bremssattels 20 gegenüber der Bremsscheibe 60 wurde in dieser konventionellen Aufhängung wie folgt realisiert: Der Bremssattel 20 ist an einer Schnittstelle (erste Halterung 51) in y-Richtung axial verschiebbar und in alle Richtungen drehbar gelagert. Kräfte, die radial zum Bolzen wirken, können in allen Richtungen übertragen werden (Festlagerung). An der zweiten Schnittstelle (zweite Halterung 52) ist ein Kugelgelenk 54 ausgeführt, das die verbleibende Reaktionskraft vom Bremssattel 20 auf den Drehgestellrahmen 40 in Richtung einer beidseitig kugelgelenkig gelagerten Stützstange 53 weiterleitet (Loslagerung).

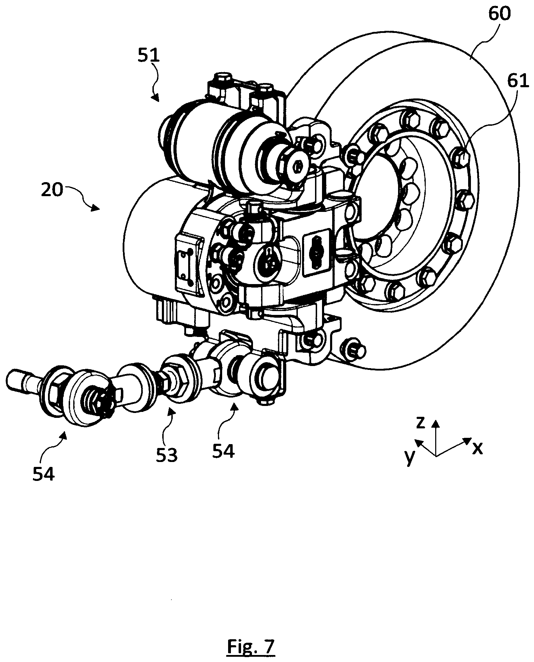

Figur 7 zeigt weitere Details der Aufhängung des Bremssattels 20, wobei der Drehgestellrahmen 40 nicht zu sehen ist. Wie aus der Figur 7 ersichtlich, ist die Stützstange 53 längenverstellbar und hat an den gegenüberliegenden Seiten jeweils ein Kugelgelenklager 54, die einerseits fest mit dem Drehgestellrahmen verbunden sind und auf der anderen Seite fest mit dem Bremssattel 20 verbunden sind. Die erste Halterung 51 ist in der gleichen Weise ausgebildet, wie es in der Figur 6 gezeigt ist. Der Bremssattel 20 koppelt wiederum an die Bremsscheibe 60 des Fahrzeuges, die über eine Befestigungseinrichtung 61 mit der Achse oder eines Fahrzeugrades des Schienenfahrzeuges verbunden ist.

Die gezeigte konventionelle Halterung des Bremssattels 20 an dem Drehgestellrahmen 40 bietet den Nachteil, dass infolge der Stützstange 53 ein größerer Raumbedarf besteht. Eine weitere Verkürzung der Stützstange kommt häufig nicht in Betracht, da eine Mindestlänge erforderlich ist, um einen ausreichenden Bewegungsspielraum zu bieten. Dieser zusätzliche Raum steht nicht in jedem Fall zur Verfügung. Beispielsweise ist es gerade bei Straßenbahnen wünschenswert, die Fahrgastzelle möglich tief zu legen und viel Platz für den Ein- und Ausstieg bereitzustellen, was den Bauraum stark begrenzt. EP 2 290 256 B1 offenbart eine bekannte elastische Bremssattelaufhängung für eine Sattelbremse eines Schienenfahrzeugs mit zwei Schwimmbolzen zum Ausgleich von Relativbewegungen.

Der vorliegenden Erfindung liegt die Aufgabe zugrunde, eine Befestigung eines Bremssattels an einem Rahmen eines Fahrzeuges zu ermöglichen, die platzsparend ist und die gleiche Funktionalität bietet, wie die konventionelle Befestigung des Bremssattels.

### Zusammenfassung

Die oben genannte Aufgabe wird durch eine Vorrichtung nach Anspruch 1 oder Anspruch 2 oder Anspruch 12 gelöst. Die abhängigen Ansprüche beziehen sich auf vorteilhafte Weiterbildungen der Gegenstände der unabhängigen Ansprüche.

Die vorliegende Erfindung bezieht sich auf eine Vorrichtung zum Befestigen eines Bremssattels an einem Rahmen eines Fahrzeuges, wobei der Bremssattel zu einer Bremse des Fahrzeuges gehört, um eine drehbare Bremsscheibe zu bremsen. Die Vorrichtung umfasst die folgenden Merkmale: einen ersten Bolzen und ein zweiten Bolzen, die beide fest mit dem Rahmen verbunden sind; eine erste Halterung zum Halten des Bremssattels an dem ersten Bolzen; und eine zweite Halterung zum Halten des Bremssattels an dem zweiten Bolzen. Die Kombination der ersten Halterung und der zweiten Halterung ist ausgebildet, um den Bremssattel drehfest in einer Ebene senkrecht zur Drehachse der Bremsscheibe zu halten und um Drehungen um zumindest eine weitere Drehachse, die senkrecht zu der Drehachse der Bremsscheibe ist, zu erlauben, wobei die erste Halterung relativ zur zweiten Halterung unbeweglich ist, wobei die erste Halterung ausgebildet ist, um alle Radialkräfte auf den ersten Bolzen zu übertragen, und die zweite Halterung ausgebildet ist, um Radialkräfte in nur einer Richtung auf den zweiten Bolzen zu übertragen.

Die vorliegende Erfindung bezieht sich ferner auf eine weitere Vorrichtung zum Befestigen eines Bremssattels an einem Rahmen eines Fahrzeuges, wobei die Bremse ausgebildet ist, um eine um eine Drehachse drehbare Bremsscheibe des Fahrzeuges zu bremsen, wobei die weitere Vorrichtung folgende Merkmale umfasst: einen ersten Bolzen und ein zweiten Bolzen, die beide fest mit dem Rahmen verbunden sind und eine erste Halterung und eine zweite Halterung, die ausgebildet sind, um den Bremssattel entsprechend an dem ersten Bolzen und an dem zweiten Bolzen derart zu halten, dass der Bremssattel drehfest in einer Ebene senkrecht zur Drehachse der Bremsscheibe ist und drehbar um zumindest eine weitere Drehachse ist, die senkrecht zu der Drehachse der Bremsscheibe ist. Bei der weiteren Vorrichtung umhüllt die erste Halterung zumindest teilweise den ersten Bolzen und/oder die zweite Halterung umhüllt zumindest teilweise den zweiten Bolzen, wobei die erste Halterung in einer axialen Richtung entlang des ersten Bolzens verschiebbar ist und die zweite Halterung in einer axialen Richtung entlang des zweiten Bolzens verschiebbar ist, wobei die erste Halterung ausgebildet ist, um alle Radialkräfte auf den ersten Bolzen zu übertragen, und die zweite Halterung ausgebildet ist, um Radialkräfte in nur einer Richtung auf den zweiten Bolzen zu übertragen. Der erste und der zweite Bolzen stellen somit Schwimmbolzen dar, die eine gemeinsame Bewegung des Bremssattels zusammen mit der Bremsscheibe in der transversalen Richtung (entlang der Drehachse eines Fahrzeugrades) ermöglicht.

Im Rahmen der vorliegenden Erfindung sind Radialkräfte derart zu verstehen, dass sie sich auf alle Kräfte beziehen, die in eine radiale Richtung auf den Bolzen (d. h. senkrecht zur axialen Richtung) wirken. Ausführungsbeispiele stellen insbesondere sicher, dass Radialkräfte in die x-Richtung möglichst direkt übertragen werden, wobei die x-Richtung beispielsweise derart definiert werden kann, dass sie sich auf die Kraftrichtung bezieht, die von dem zu kompensierenden Drehmoment auf dem Bremssattel ausgeübt wird (z.B. die Fahrtrichtung des Fahrzeuges, wenn der Bremssattel beispielsweise in Fahrtrichtung hinter dem Fahrzeugrad angeordnet wird).

Der Rahmen kann beliebig gewählt werde, solange er dafür geeignet ist das zu kompensierende Drehmoment beim Bremsen aufzunehmen. Der Rahmen ist breit auszulegen und kann jede Komponente umfassen, die über eine Federstufe an die Räder oder die Achse des Fahrzeuges koppelt. Beispielswiese kann es der Drehgestellrahmen des beispielhaften Schienenfahrzeugs sein. Der Rahmen kann ebenfalls eine beliebige Komponente sein, die mit dem Drehgestellrahmen verbunden ist, wie beispielsweise ein Motorgehäuse oder ein Getriebegehäuse oder ähnliche Komponenten des Fahrzeuges.

Daher beziehen sich Ausführungsbeispiele auf Vorrichtungen zum Befestigen des Bremssattels, die keine Stützstange aufweist, wobei die Stützstange in dem vorliegenden Zusammenhang als eine Stange definiert werden kann, die eine Bewegung in der Ebene senkrecht zur Drehachse des Rades verhindert (um so das Drehmoment zu übertragen). Daher ist in weiteren Ausführungsbeispielen sowohl die erste Halterung als auch die zweite Halterung eine stützstangenfreie Halterung.

In weiteren Ausführungsbeispielen ist die erste Halterung ausgebildet, um alle Radialkräfte auf den ersten Bolzen zu übertragen, und/oder die zweite Halterung ist ausgebildet, um Radialkräfte in nur einer Richtung auf den zweiten Bolzen zu übertragen.

In weiteren Ausführungsbeispielen umfasst der Bremssattel zumindest ein Bremssatteljoch und die zweite Halterung zumindest eine Gelenkbuchse, wobei die Gelenkbuchse fest mit dem Bremssatteljoch verbunden ist und eine Innenkontur der Gelenkbuchse derart geformt ist, dass die Drehung um die zumindest eine weitere Drehachse möglich ist und dass die Radialkräfte in der nur einen Richtung übertragen werden.

In weiteren Ausführungsbeispielen ist die zweite Halterung und/oder der zweite Bolzen ausgebildet, um eine Kraftübertragung elastizitätsfrei bei einem Drehmoment um die Drehachse (z.B. die y-Achse) zu gewährleisten und um eine elastische Kraftübertragung um die zumindest eine weitere Drehachse (z.B. die z-Achse oder die x-Achse) zu ermöglichen.

In weiteren Ausführungsbeispielen umfasst die zweite Halterung und/oder der zweite Bolzen zumindest ein elastisches Element, um die elastische Kraftübertragung um die zumindest eine weitere Drehachse (z.B. die z-Achse oder die x-Achse) zu gewährleisten.

In weiteren Ausführungsbeispielen weist die zweite Halterung einen Mindestspielraum in eine Translationsrichtung einer Radialrichtung (z.B. der vertikalen Richtung des Fahrzeuges) des zweiten Bolzens auf. Diese Translationsrichtung ist beispielsweise die Richtung der z-Achse.

In weiteren Ausführungsbeispielen ist der Mindestspielraum durch einen Spalt zwischen dem zweiten Bolzen und der zweiten Halterung gegeben.

In weiteren Ausführungsbeispielen steht die Translationsrichtung senkrecht auf einer Verbindungslinie zwischen der Drehachse der Bremsscheibe und einem Schwerpunkt des Bremssattels. Optional kann die Translationsrichtung entlang einer Verbindungslinie zwischen dem ersten Bolzen und dem zweiten Bolzen verlaufen, die beispielsweise entlang der vertikalen Richtung des Fahrzeuges verläuft.

In weiteren Ausführungsbeispielen umfasst die zweite Halterung ein Elastomer-Element, das ausgebildet ist, um einen Spielraum in einer Richtung, in der der Bremssattel drehfest ist, zu minimieren und um den Bremssattel abzufedern. Bei weiteren Ausführungsbeispielen ist zusätzlich oder alternativ der erste und/oder zweite Bolzen selbst elastisch ausgebildet, um eine elastische Deformation in einem bestimmten Bereich zu erlauben. Nach der Beanspruchung kann der Bolzen dann wieder in die ursprüngliche Ausgangslage elastisch zurückkehren. Der Bolzen kann aber auch einen Überzug aufweisen, der eine bestimmte Elastizität bereitstellt. Die elastische Wirkung kann in alle Richtungen gleich ausgebildet sein oder von der Richtung abhängen (z.B. entlang der x-Richtung weniger oder stärker elastisch deformierbar sein).

In weiteren Ausführungsbeispielen umfasst die zweite Halterung ein Gelenkelement und das Gelenkelement ist ausgebildet, um eine Translationsbewegung entlang des zweiten Bolzens zu ermöglichen und eine Drehbewegung um die zumindest eine weitere Drehachse zu ermöglichen.

Die vorliegende Erfindung bezieht sich ebenso auf eine Vorrichtung zum Befestigen eines Bremssattels an einem Rahmen eines Fahrzeuges, wobei die Bremse ausgebildet ist, um eine um eine Drehachse drehbare Bremsscheibe des Fahrzeuges zu bremsen, die Folgendes umfasst: Mittel zum Übertragen eines Drehmomentes, das bei einer Bremsung der Bremsscheibe auf den Bremssattel übertragen wird, an den Rahmen; und Mittel zum Schwenken des Bremssattels relativ zum Rahmen in Richtungen, die senkrecht auf das Drehmoment stehen. Die Mittel zum Schwenken umfassen einen Mindestspalt und ein Schwenkbereich in zumindest eine Schwenkrichtung hängt von einer Größe des Mindestspaltes ab, wobei der Mindestspalt einen Mindestspielraum zwischen einem am Rahmen fixierten Bolzen und einer Halterung zum Halten des Bremssattels bildet.

Die vorliegende Erfindung bezieht sich auch auf eine Bremssattelaufhängung mit einem Bremssattel und einer zuvor beschriebenen Vorrichtung.

Die vorliegende Erfindung bezieht sich auch auf ein Schienenfahrzeug mit einem Rahmen; einer Bremsscheibe; und der zuvor genannten Bremssattelaufhängung. Der Rahmen kann beispielsweise ein Drehgestellrahmen sein.

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1A,B: zeigt eine Vorrichtung gemäß einem Ausführungsbeispiel der vorliegenden Erfindung.
- Fig. 2: veranschaulicht weitere Details eines Ausführungsbeispiels für die Vorrichtung zum Befestigen des Bremssattels.
- Fig. 3: zeigt weitere Details für die zweite Halterung und die erste Halterung.
- Fig. 4: zeigt ein weiteres Ausführungsbeispiel für die zweite Halterung.
- Fig. 5: zeigt eine Querschnittsansicht eines beispielhaften Schienenfahrzeugs.
- Fig. 6: veranschaulicht eine Anbringung des Bremssattels an dem Drehgestellrahmen unter Nutzung einer konventionellen Stützstange.
- Fig. 7: zeigt weitere Details der konventionellen Aufhängung des Bremssattels.

### Detaillierte Beschreibung

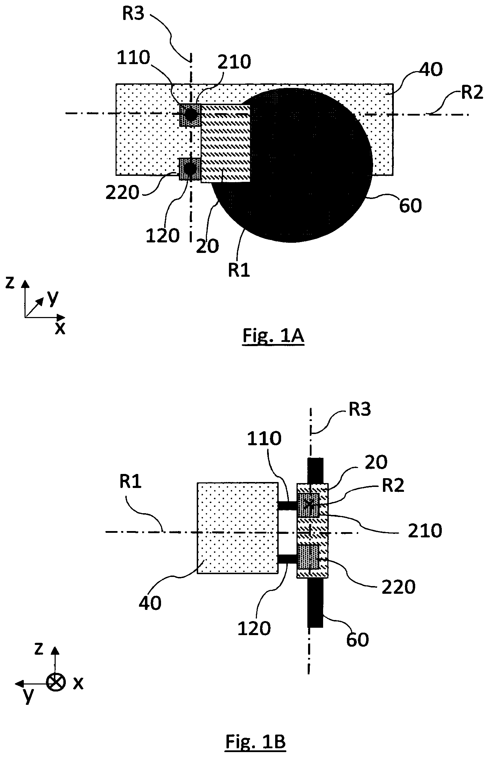

Fig. 1 zeigt eine Vorrichtung zum Befestigen eines Bremssattels 20 an einem Rahmen 40 eines Fahrzeuges. Der Bremssattel 20 gehört zu einer Bremse des Fahrzeuges, die ausgebildet ist, um eine drehbare Bremsscheibe 60 (und damit das Fahrzeug) zu bremsen. Die Vorrichtung umfasst einen ersten Bolzen 110 und einen zweiten Bolzen 120, die beide fest mit dem Rahmen 40 verbunden sind. Der erste und der zweite Bolzen 110, 120 können beispielsweise gradförmig ausgebildet sein. Außerdem wird der Bremssattels 20 an dem ersten Bolzen 110 durch eine erste Halterung 210 gehalten und an dem zweiten Bolzen 120 durch eine zweite Halterung 220 gehalten. Die Kombination der ersten Halterung 210 und der zweiten Halterung 220 ist ausgebildet, um den Bremssattel 20 drehfest in einer Ebene x-z senkrecht zur Drehachse R1 der Bremsscheibe 60 zu halten und um Drehungen um zumindest eine weitere Drehachse R2, R3, die senkrecht zu der Drehachse R1 der Bremsscheibe 60 ist, zu erlauben. Die erste Halterung 210 ist relativ zur zweiten Halterung unbeweglich ist.

Gemäß Ausführungsbeispielen der vorliegenden Erfindung stellt der erste Bolzen 110 und der zweite Bolzen 120 jeweils einen Schwimmbolzen dar. Daher können die erste Halterung und die zweite Halterung optional oder alternativ auch wie folgt definiert werden. Die erste Halterung 210 umhüllt den ersten Bolzen 110 zumindest teilweise und ist in eine axiale Richtung (y-Richtung) entlang des ersten Bolzens 110 verschiebbar. Außerdem kann die zweite Halterung 220 den zweiten Bolzen 120 zumindest teilweise umhüllen und ist auch in eine axiale Richtung y entlang des zweiten Bolzens 120 verschiebbar.

Der Rahmen 20 kann beispielsweise der Drehgestellrahmen 40 eines Schienenfahrzeugs sein, der je nach Drehgestellkonstruktion oft die einzige Anbindungsmöglichkeit für den Bremssattel 20 bietet. Darüber hinaus dient die Befestigung des Bremssattels 20 am primärgefederten Drehgestell der Reduzierung der ungefederten Massen im Fahrzeug sowie der Reduzierung der Belastung durch Schock und Vibration auf den Bremssattel 20.

Welche Halterung als erste und welche als zweite Halterung bezeichnet wird, ist frei wählbar. Die zweite Halterung kann beispielsweise derart definiert werden, dass sie jene Halterung ist, die nicht in allen radialen Richtungen durch den Bolzen fixiert ist, sondern in zumindest eine Richtung einen gewissen Spielraum frei lässt.

Wenn der Bremssattel nicht wie in der Figur 1 gezeigt, hinter dem Rad angeordnet ist, sondern beispielsweise über dem Rad oder vor dem Rad, kann beispielsweise das Koordinatensystem anders gewählt sein. Somit beziehen sich die Ausführungsbeispiele insbesondere auf ein solches Koordinatensystem, in welchem die y-Achse die Drehachse des Rades definiert und die x-Achse jene radialen Richtung des Rades ist, die hin zu dem Bremssattel 20 zeigt und die z-Achse die dazu senkrechte Richtung definiert.

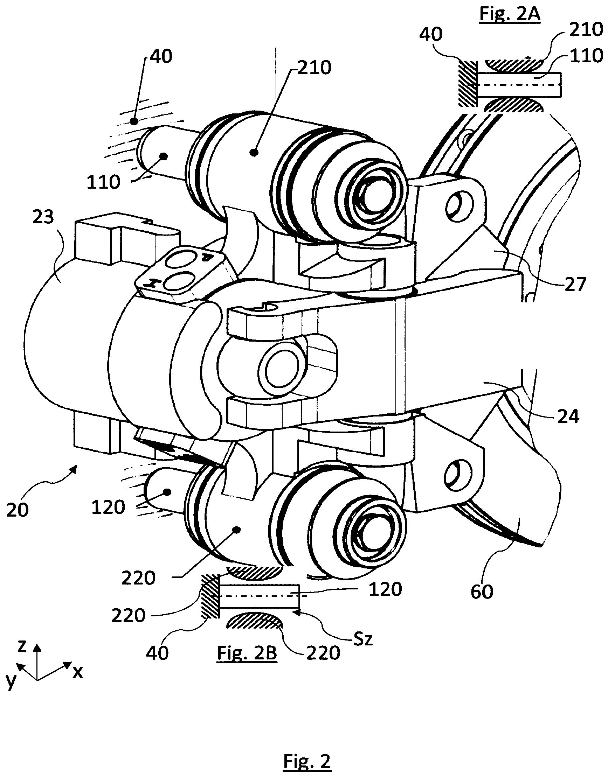

Fig. 2 zeigt weitere Details eines Ausführungsbeispiels für eine Vorrichtung zum Befestigen des Bremssattels 20 an dem Rahmen 40 eines Fahrzeuges. In dem gezeigten Ausführungsbeispiel ist an dem Bremssattel 20 eine hydraulische Bremsanlage 23 befestigt, die über einen Hebel 24 eine Bremseinrichtung 27 betätigt, die an die Bremsscheibe 60 koppelt, und dadurch den Bremsvorgang in Gang setzt. Bei dem Bremsvorgang kommt es zu einer Abbremsung des Rades 60 (z. B. eine Bremsscheibe). Das hat zur Folge, dass auf dem Bremssattel 20 und der darauf befestigten Bremsanlage ein Drehmoment in der x-z-Ebene wirkt (d.h. um eine parallele Achse der y-Achse herum). Dieses Drehmoment muss durch den Bremssattel 20 abgefangen werden, um die Bremsung des Fahrzeuges zu bewirken. Daher wird gemäß Ausführungsbeispielen die erste Halterung 210 und die zweite Halterung 220 für den Bremssattel derart ausgebildet bzw. geformt, dass eine relative Drehbewegung zwischen dem Rahmen 40 und dem Bremssattel 20 in der x-z-Ebene unterdrückt wird (d. h. der Bremssattel 20 ist drehfest in dieser Drehebene).

Dies kann beispielsweise durch Querschnittsgeometrien erfolgen, wie sie in den Figuren 2A und 2B zu sehen sind.

Die Fig. 2A zeigt eine vergrößerte Darstellung der ersten Halterung 210 des Bremssattels 20 an dem ersten Bolzen 110, der fest mit dem Rahmen 40 verbunden ist. In dem gezeigten Ausführungsbeispiel erfolgt die Fixierung der ersten Halterung 210 an den ersten Bolzen 110 derart, dass Radialkräfte aus allen Richtungen auf den Bolzen 110 übertragen werden. Das hat zur Folge, dass bei einer Bremsung ein Drehmoment auf dem Bremssattel 20 wirkt, und zwar um den ersten Bolzen 110 herum wirkt. Diese Ausgestaltung der ersten Halterung 210 ist somit ähnlich oder gleich, wie die konventionelle Aufhängung der Fig. 6.

Die zweite Halterung 220 stellt eine Fixierung des Bremssattels 20 an dem zweiten Bolzen 120 bereit, wobei der zweite Bolzen 120 wieder fest mit dem Rahmen 40 verbunden ist. Um die besagte Drehbewegung in der x-z-Ebene zu unterdrücken, ist die zweite Halterung 220 derart ausgebildet, dass eine Kraft, die entlang der x-Richtung wirkt, direkt auf den zweiten Bolzen 120 übertragen wird. Gleichzeitig ist jedoch sicherzustellen, dass sich der Bremssattel 20 bei einer Federung des Fahrzeuges relativ zu dem Rahmen 40 bewegen bzw. drehen kann, so dass die Bremsscheiben 60 stets parallel zu der Bremseinrichtung ausgerichtet bleiben, um so eine effektive Bremsung zu gewährleisten. Dazu wird gemäß Ausführungsbeispielen der erste und zweite Bolzen 110, 120 als Schwimmbolzen ausgebildet. Dazu ist sowohl die erste Halterung 210 als auch die zweite Halterung 220 axial entlang des ersten bzw. zweiten Bolzens verschiebbar. Außerdem ist der Bremssattel 20 durch die erste Halterung 210 und die zweiter Halterung 220 derart mittels des ersten Bolzens 110 und des zweiten Bolzens 120 an dem Rahmen 40 fixiert, dass eine Drehung um die z-Richtung als auch eine Drehung um die x-Richtung - zumindest in einem vorbestimmten Bereich - möglich ist.

Konkret können diese Funktionen in dem gezeigten Ausführungsbeispiel dadurch sichergestellt werden, dass die erste Halterung 210 an den ersten Bolzen 110 beispielsweise über ein abgerundetes Profil koppelt (siehe Fig. 2A) und die zweite Halterung 220 an den zweiten Bolzen 120 ebenfalls über ein abgerundetes Profil koppelt (siehe Fig. 2B).

Die abgerundete Profile entlang der Bolzen 110, 120 sind auf beiden radialen Seiten der Bolzen 110, 120 (auf der x-Seite und auf der z-Seite) ausgebildet und ermöglichen, dass der Bremssattel 20 zusammen mit der ersten Halterung 210 und der zweiten Halterung 220 um die z-Achse herum drehbar ist.

Um ebenfalls eine Drehung in einem bestimmten Drehbereich um die x-Achse herum zu ermöglichen, weist die zweite Halterung 220 einen Spielraum Sz zwischen dem zweiten Bolzen 120 und den abgerundeten Flächen der zweiten Halterung 220 auf. Dadurch wird es möglich, dass bei einer Drehung um die x-Achse herum der Bremssattel 20 sich bei der zweiten Halterung 220 leicht axial in die y-Richtung verschiebt. Aufgrund des Spielraumes Sz zwischen dem zweiten Bolzen 120 und den abgerundeten Flächen 220 ist eine solche Verschiebung bei gleichzeitiger Drehung um den Fixpunkt der ersten Halterung 210 über einen bestimmten Bereich möglich.

Es versteht sich, dass die beschriebene Anordnung nicht zwingend erforderlich ist. Beispielsweise bezieht sich die Darlegung oben auf den Spezialfall, dass der erste und zweite Bolzen 110, 120 vertikal übereinander (entlang der z-Richtung) angeordnet sind. Wenn die Bolzen 110, 120 anders angeordnet werden, wäre die gesamte Anordnung entsprechend zu verschieben oder zu drehen. Wichtig ist lediglich, dass die erste und zweite Halterungen 210, 220 Mittel für die benötigten Funktionen bereitstellen, d.h. Mittel zum Übertragen eines Brems-Drehmoments und Mittel zum Schwenken des Bremssattels 20 relativ zum Rahmen 40, und zwar senkrecht zu dem Bremsdrehmoment.

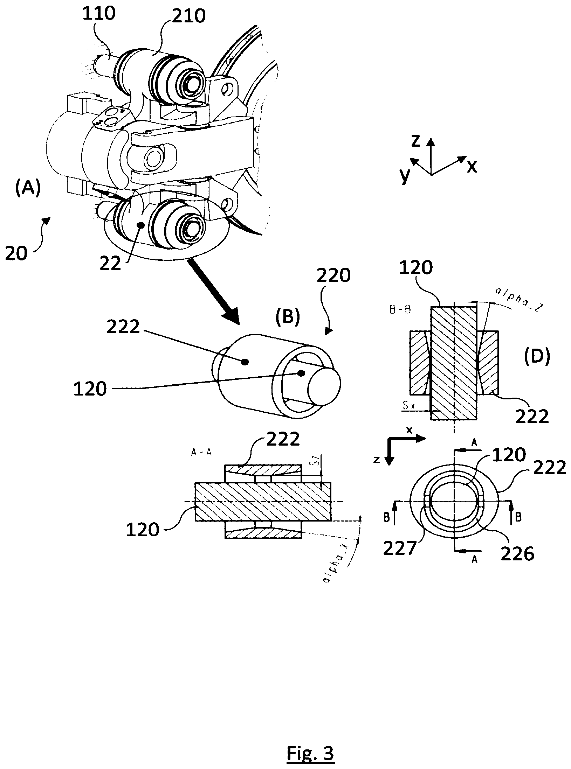

Die Figur 3 zeigt weitere Details für die zweite Halterung 220. Die erste Halterung 210 kann gemäß Ausführungsbeispielen in der gleichen Art gebildet sein, wie dies in den Fig. 6, 7 gezeigt wurde.

In dem gezeigten Ausführungsbeispiel ist die zweite Halterung 220 beispielsweise über einen Bremssatteljoch 22 fest mit dem Bremssattel 20 verbunden. Außerdem weist die zweite Halterung 220 eine Gelenkbuchse 222 auf, die sich um den zweiten Bolzen 120 herum hülsenförmig erstreckt (siehe Fig. 3B).

Die Fig. 3C zeigt eine Querschnittsansicht senkrecht zu der axialen Richtung des zweiten Bolzens 220 durch die Gelenkbuchse 222 (beispielsweise mittig). Die Fig. 3D zeigt eine Querschnittsansicht entlang der Querschnittslinie B-B und die Fig. 3E zeigt eine Querschnittsansicht entlang der Querschnittslinie A-A, wie sie in der Fig. 3C definiert sind. Außerdem weist die Gelenkbuchse 222 ein Elastomer-Element 226, um beispielsweise eine Elastizität über die Bolzenlagerung zu gewährleisten. Optional ist es ebenfalls möglich die Elastizität über den Bolzen 120 selbst zu realisier (z.B. über eine Oberflächenbeschichtung). Ein weiteres elastisches Element 127 kann beispielsweise bei den Kontaktpunkten des Bolzens 120 zu der Halterung 220 ausgebildet sein. Das weitere elastische Element 127 kann dadurch gekennzeichnet sein, dass es das erforderliche Spiel in x-Richtung minimiert und abgefedert wird. Optional kann es auch eine höhere Festigkeit als das Elastomer-Element 126 aufweisen, um eine möglichst direkte Übertragung des Drehmomentes zu ermöglichen.

Wie aus der Fig. 3 ersichtlich ist, ist der zweite Bolzen 120 durch die Hülse 222 umschlossen. Die Innenkontur der Gelenkbuchse 222 weist dabei einen hyperbel-ähnlichen Querschnitt auf, wobei die Innenkontur der Gelenkbuchse 222 den zweiten Bolzen 120 entlang der x-Richtung kontaktiert (bzw. bis auf einen minimalen Abstand einen festen Halt in dieser Richtung bietet) und entlang der z-Richtung von dem zweiten Bolzen 120 beabstandet ist, d.h. einen Spalt Sz aufweist.

Wie aus Fig. 3E ersichtlich, ist der Abstand in der z-Richtung (das Spiel oder der Spalt Sz) entlang der axialen Erstreckung des zweiten Bolzens 120 nicht konstant. Vielmehr verläuft die Innenkontur von der Gelenkbuchse 222 entlang der axialen Richtung des zweiten Bolzens 120 von der einen Seite zunächst hin zum dem zweiten Bolzen 120, um sich anschließend wieder davon zu entfernen, so dass sich von einem Inneren der Gelenkbuchse betrachtet eine konvexe Oberfläche ergibt (oder in der Querschnittsebene eine Hyperbel-ähnliche Form ergibt). Dies bietet den Vorteil, dass die Gelenkbuchse 222 sich zusammen dem Bremssattel 20 in der x-Richtung verdrehen kann, und zwar solange, bis der zweite Bolzen 120 die konvex gestaltete Innenkontur entlang der Schnittlinie A-A berührt. Daher kann mit dem Spalt Sz die Schwingungsbreite (um die x-Richtung) des Bremssattels 20 eingestellt werden.

Wie in der Fig. 3D zu sehen ist, nähert sich die Gelenkbuchse 222 entlang der Querschnittslinie B-B bis auf einen Minimalabstand, beispielweise in der Mitte der axialen Ausdehnung des zweiten Bolzens 120, der Gelenkbuchse 222 an. Wiederum ist die Innenkontur derart geformt, dass die Gelenkbuchse 222 zu beiden Enden hin sich weiter öffnet, um so auch in dieser Querschnittsebene zwei konvex gestaltete, gegenüber liegende Innenkonturen (d.h. eine Hyperbel) zu bilden. Dies hat den Effekt, dass die Gelenkbuchse 222 relativ zu dem zweiten Bolzen 120 um die z-Richtung herum drehbar ist, und zwar um einen Winkel alpha_Z.

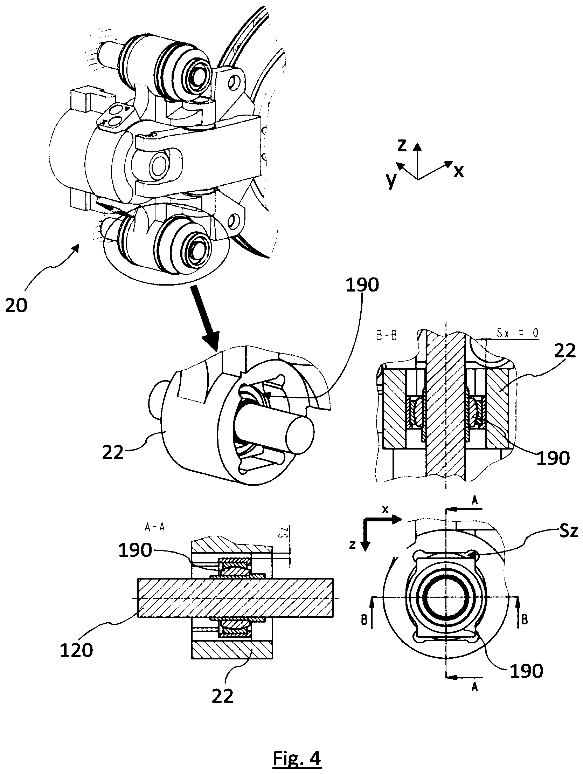

Die Fig. 4 zeigt ein weiteres Ausführungsbeispiel für die zweite Halterung 220, wobei die Fig. 4A eine Raumansicht der Vorrichtung zusammen mit dem Bremssattel 20 und der Bremseinrichtung zeigt und die Fig. 4B wieder eine vergrößerte Darstellung der zweiten Halterung 220 zeigt. In diesem Ausführungsbeispiel ist die spezielle Innenkontur der zweiten Halterung 220, wie sie in der Fig. 3 beschrieben wurde, ersetzt durch ein Gelenklager 190, welches entlang der y-Richtung verschiebbar ist.

Die Fig. 4C zeigt eine Schnittdarstellung senkrecht zur y-Richtung durch das verschiebbare Gelenklager 190, die Fig. 4D zeigt eine weitere Schnittdarstellung entlang der Schnittebene B-B, wie sie in der Fig. 4C zu sehen ist, und die Fig. 4E zeigt eine Schnittdarstellung entlang der Schnittebene A-A, wie sie in der Fig. 4C definiert ist.

Das gezeigte Gelenklager 190 bietet die gleiche Funktionalität, wie in dem zuvor gezeigten Ausführungsbeispiel. Die Verdrehungsfunktionen werden hier nicht durch die entsprechend gestaltete Kontur der Innenoberfläche der Gelenkhülse 222 bereitgestellt, sondern durch ein Gelenk 190. Wiederum sind sowohl die erste Halterung 210 als auch die zweite Halterung 220 axial in die y-Richtung entlang den ersten und zweiten Bolzen 110, 120 verschiebbar (zumindest in einem gewissen Rahmen).

Wie in der Schnittebene der Fig. 4D zu sehen ist, ist die zweite Halterung 220 wiederum bis auf einen Minimalabstand in der x-Richtung (der idealerweise gleich Null ist; Sx=0) von dem zweiten Bolzen 120 entfernt. Auf der anderen Seite, wie es die Fig. 4E zeigt, ist zwischen der zweiten Halterung 220 und dem Gelenklager 190 in der z-Richtung ein vorbestimmter Spielraum Sz vorgesehen, der wiederum die Drehung um die x-Achse erlaubt. Das gezeigte Gelenklager 190 kann eine Drehung sowohl um die x-Achse als auch um die z-Achse ermöglichen, wobei der Unterschied zwischen den beiden Drehungen darin besteht, dass bei Drehung um die x-Achse (da sie um die erste Halterung 110 herum erfolgt) eine axiale Verschiebung der zweiten Halterung 220 bei einer Verringerung des z-Abstandes zwischen dem Gelenklager 190 und dem Bremssatteljoch 22 erfolgt.

Wie bereits gesagt, ist die Beschreibung an ein bestimmtes Koordinatensystem angepasst - ohne dass die vorliegende Erfindung darauf einzuschränken wäre. Die gezeigten Koordinatensysteme stellen lediglich Beispiele dar. Insbesondere ist die Anordnung des Bremssattels auf der gezeigten Seite bezüglich des Rahmens lediglich ein Beispiel und kann bei anderen Ausführungsbeispielen anders gewählt werden.

Ausführungsbeispiele bieten den Vorteil, dass die Stützstange entbehrlich ist, sodass die Erfindung auch bei beschränktem Einbauraum umgesetzt werden kann. Insbesondere wird auch ohne Stützstange sowohl die Kraftübertragung als auch die Winkelbeweglichkeit des Bremssattels ermöglicht. Weitere wichtige Aspekte der vorliegenden Erfindung auch wie folgt zusammengefasst werden können.

Über feste oder bewegliche Bauteile wird die Beweglichkeit des Bremssattels so gewährleistet, dass anstelle der doppelt gelagerten Stützstange eine einzelne Lagerstelle genügt. Das Prinzip der Festlagerung in der Schnittstelle 1 sowie der Loslagerung in einer Schnittstelle 2 wird beibehalten. Die Loslagerung kann nur nahe der X-Richtung Kräfte übertragen.

Ausführungsbeispiele beziehen sich u.a. auf eine Fest-Los-Lagerung. Die Schnittstelle 1 bleibt unverändert in Y-Richtung axial verschieblich und winklig um alle Achsen beweglich. Sowohl Schnittstelle 1 also auch Schnittstelle 2 können durch einen feststehenden Bolzen realisiert werden.

Mit dem Bremssatteljoch ist eine Gelenkbuchse fest verbunden. Die Innenkontur der Gelenkbuchse ist so gestaltet, dass eine Kraftübertragung in X-Richtung mit möglichst kleinem Spiel Sx gewährleistet ist. Gleichzeitig ist eine winklige Beweglichkeit um die Z-Achse gegeben (alpha_Z).

Das Spiel Sz ist so gestaltet, dass sich in Z-Richtung keine Kräfte übertragen lassen, aber eine Winkelbeweglichkeit des Bremssattels um die X-Achse bei fest stehenden Bolzen gewährleistet ist (alpha_X).

Im Bremssatteljoch ist ein Gelenklager so angebracht, dass es sich in Z- Richtung verschieben lässt. In X-Richtung ist die Anordnung annähernd spielfrei.

### Liste von Bezugszeichen

- 11, 12: erster und zweiter Bolzen
- 20: Bremssattel
- 22: Bremssatteljoch
- 30: Feder
- 35: Federwinkel
- 40: Rahmen
- 51: erste Bremssattelbefestigung
- 52: zweite Bremssattelbefestigung
- 53: Stützstangen
- 54: Kugelgelenk
- 60: Bremsscheibe
- 61: Befestigungseinrichtung
- 62: Fahrzeugachse
- 64: Fahrzeugrad
- 110: erster Bolzen
- 120: zweiter Bolzen
- 210: erste Halterung
- 220: zweite Halterung
- 222: Gelenkbuchse
- 226: Elastomer-Element
- R1, R2, R3: senkrecht aufeinander stehende Drehachsen

## Patentansprüche

1. Vorrichtung zum Befestigen eines Bremssattels (20) an einem Rahmen (40) eines Fahrzeuges, wobei der Bremssattel (20) zu einer Bremse des Fahrzeuges gehört, um eine drehbare Bremsscheibe (60) zu bremsen, mit folgenden Merkmalen:
ein erster Bolzen (110) und ein zweiter Bolzen (120), die beide fest mit dem Rahmen (40) verbunden sind;
eine erste Halterung (210) zum Halten des Bremssattels (20) an dem ersten Bolzen (110); und
eine zweite Halterung (220) zum Halten des Bremssattels (20) an dem zweiten Bolzen (120),
wobei die Kombination der ersten Halterung (210) und der zweiten Halterung (220) ausgebildet ist, um den Bremssattel (20) drehfest in einer Ebene (x-z) senkrecht zur Drehachse (R1) der Bremsscheibe (60) zu halten und um Drehungen um zumindest eine weitere Drehachse (R2, R3), die senkrecht zu der Drehachse (R1) der Bremsscheibe (60) ist, zu erlauben, wobei die erste Halterung (210) relativ zur zweiten Halterung (220) unbeweglich ist, und
wobei die erste Halterung (210) ausgebildet ist, um alle Radialkräfte auf den ersten Bolzen (110) zu übertragen, und **dadurch gekennzeichnet, dass** die zweite Halterung (220) ausgebildet ist, um Radialkräfte in nur einer Richtung auf den zweiten Bolzen (120) zu übertragen.

2. Vorrichtung zum Befestigen eines Bremssattels (20) an einem Rahmen (40) eines Fahrzeuges, wobei die Bremse ausgebildet ist, um eine um eine Drehachse (R1) drehbare Bremsscheibe (60) des Fahrzeuges zu bremsen, mit folgenden Merkmalen:
ein erster Bolzen (110) und ein zweiter Bolzen (120), die beide fest mit dem Rahmen (40) verbunden sind; und
eine erste Halterung (210) und eine zweite Halterung (220), die ausgebildet sind, um den Bremssattel (20) entsprechend an dem ersten Bolzen (110) und an dem zweiten Bolzen (120) derart zu halten, dass der Bremssattel (20) drehfest in einer Ebene senkrecht zur Drehachse (R1) der Bremsscheibe (60) ist und drehbar um zumindest eine weitere Drehachse (R2, R3) ist, die senkrecht zu der Drehachse (R1) der Bremsscheibe (60) ist, wobei
die erste Halterung (210) den ersten Bolzen (110) zumindest teilweise umhüllt und in eine axiale Richtung (y) entlang des ersten Bolzens (110) verschiebbar ist, und/oder
die zweite Halterung (220) den zweiten Bolzen (120) zumindest teilweise umhüllt und in eine axiale Richtung (y) entlang des zweiten Bolzens (120) verschiebbar ist,
wobei die erste Halterung (210) ausgebildet ist, um alle Radialkräfte auf den ersten Bolzen (110) zu übertragen, und **dadurch gekennzeichnet, dass** die zweite Halterung (220) ausgebildet ist,
um Radialkräfte in nur einer Richtung auf den zweiten Bolzen (120) zu übertragen.

3. Vorrichtung nach Anspruch 1 oder Anspruch 2, wobei sowohl die erste Halterung (210) als auch die zweite Halterung (220) stützstangenfreie Halterungen sind.

4. Vorrichtung nach einem der vorhergehenden Ansprüchen, wobei der Bremssattel (20) zumindest ein Bremssatteljoch (22) und die zweite Halterung (220) zumindest eine Gelenkbuchse (222) umfasst, wobei die Gelenkbuchse (222) fest mit dem Bremssatteljoch (22) verbunden ist und eine Innenkontur der Gelenkbuchse (222) derart geformt ist, dass die Drehung um die zumindest eine weitere Drehachse (R2) möglich ist und dass die Radialkräfte in der nur einen Richtung übertragen werden.

5. Vorrichtung nach einem der vorhergehenden Ansprüche, wobei die zweite Halterung (220) und/oder der zweite Bolzen (120) ausgebildet sind, um eine Kraftübertragung elastizitätsfrei bei einem Drehmoment um die Drehachse (R1) und um eine elastische Kraftübertragung bei einem Drehmoment um die zumindest eine weitere Drehachse (R2, R3) zu gewährleisten.

6. Vorrichtung nach Anspruch 5, wobei die zweite Halterung (220) und/oder der zweite Bolzen (120) zumindest ein elastisches Element aufweist, um die elastische Kraftübertragung bei dem Drehmoment um die zumindest eine weitere Drehachse (R2, R3) zu gewährleisten.

7. Vorrichtung nach einem der vorhergehenden Ansprüche, wobei die zweite Halterung (220) einen Mindestspielraum (Sz) in eine Translationsrichtung einer Radialrichtung des zweiten Bolzens aufweist.

8. Vorrichtung nach Anspruch 7, wobei der Mindestspielraum (Sz) ein Spalt zwischen dem zweiten Bolzen (120) und der zweiten Halterung (220) ist.

9. Vorrichtung nach Anspruch 7 oder Anspruch 8, wobei die Translationsrichtung senkrecht zu einer Verbindungslinie zwischen der Drehachse (R1) der Bremsscheibe (60) und einem Schwerpunkt des Bremssattels (20) ist oder entlang einer Verbindungslinie zwischen dem ersten Bolzen (110) und dem zweiten Bolzen (120) liegt.

10. Vorrichtung nach einem der vorhergehenden Ansprüche, wobei die zweite Halterung (220) ein Elastomer-Element (226) aufweist, das ausgebildet ist, um einen Spielraum in einer Richtung (x), in der der Bremssattel (20) drehfest ist, zu minimieren und um den Bremssattel (20) abzufedern.

11. Vorrichtung nach einem der vorhergehenden Ansprüche, wobei die zweite Halterung (220) ein Gelenkelement umfasst und das Gelenkelement ausgebildet ist, um eine Translationsbewegung entlang des zweiten Bolzens (220) zu ermöglichen und eine Drehbewegung um die zumindest eine weitere Drehachse (R2, R3) zu ermöglichen.

12. Vorrichtung zum Befestigen eines Bremssattels (20) an einem Rahmen (40) eines Fahrzeuges, wobei die Bremse ausgebildet ist, um eine um eine Drehachse (R1) drehbare Bremsscheibe (60) des Fahrzeuges zu bremsen, mit folgenden Merkmalen:
Mittel zum Übertragen eines Drehmomentes, das bei einer Bremsung der Bremsscheibe (60) auf den Bremssattel (20) übertragen wird, an den Rahmen (40); und
Mittel zum Schwenken des Bremssattels (20) relativ zum Rahmen (40) in Richtungen, die senkrecht auf das Drehmoment stehen,
**dadurch gekennzeichnet, dass** die Mittel zum Schwenken einen Mindestspalt aufweisen und ein Schwenkbereich in zumindest eine Schwenkrichtung von einer Größe des Mindestspaltes abhängt, wobei der Mindestspalt einen Mindestspielraum (Sz) zwischen einem am Rahmen (40) fixierten Bolzen (120) und einer Halterung (220) zum Halten des Bremssattels (20) bildet.

13. Bremssattelaufhängung mit:
einem Bremssattel (20); und
einer Vorrichtung nach einem der Ansprüche 1 bis 12.

14. Schienenfahrzeug mit:
einem Rahmen (40);
einer Bremsscheibe (60); und
einer Bremssattelaufhängung nach Anspruch 13.

15. Schienenfahrzeug nach Anspruch 14, wobei der Rahmen (40) ein Drehgestellrahmen ist.

## Claims

1. Apparatus for fastening a brake calliper (20) to a frame (40) of a vehicle, the brake calliper (20) belonging to a brake of the vehicle, in order to brake a rotatable brake disc (60), with the following features:
a first pin (110) and a second pin (120) which are both connected fixedly to the frame (40);
a first holder (210) for holding the brake calliper (20) on the first pin (110); and
a second holder (220) for holding the brake calliper (20) on the second pin (120),
the combination of the first holder (210) and the second holder (220) being configured to hold the brake calliper (20) in a rotationally locked manner in a plane (x-z) perpendicularly with respect to the rotational axis (R1) of the brake disc (60), and to permit rotations about at least one further rotational axis (R2, R3) which is perpendicular with respect to the rotational axis (R1) of the brake disc (60), the first holder (210) being immovable relative to the second holder (220), and the first holder (210) being configured to transmit all radial forces to the first pin (110), and **characterized in that** the second holder (220) is configured to transmit radial forces in only one direction to the second pin (120) .

2. Apparatus for fastening a brake calliper (20) to a frame (40) of a vehicle, the brake being configured to brake a brake disc (60) of the vehicle, which brake disc (60) can be rotated about a rotational axis (R1), with the following features:
a first pin (110) and a second pin (120) which are both connected fixedly to the frame (40); and
a first holder (210) and a second holder (220) which are configured to hold the brake calliper (20) correspondingly on the first pin (110) and on the second pin (120) in such a way that the brake calliper (20) is rotationally locked in a plane perpendicularly with respect to the rotational axis (R1) of the brake disc (60) and can be rotated about at least one further rotational axis (R2, R3) which is perpendicular with respect to the rotational axis (R1) of the brake disc (60), the first holder (210) encasing the first pin (110) at least partially and being displaceable in an axial direction (y) along the first pin (110), and/or the second holder (220) encasing the second pin (120) at least partially and being displaceable in an axial direction (y) along the second pin (120), the first holder (210) being configured to transmit all radial forces to the first pin (110), and **characterized in that** the second holder (220) is configured to transmit radial forces in only one direction to the second pin (120).

3. Apparatus according to Claim 1 or Claim 2, both the first holder (210) and the second holder (220) being holders which are free from supporting rods.

4. Apparatus according to one of the preceding claims, the brake calliper (20) comprising at least one brake calliper yoke (22), and the second holder (220) comprising at least one pivot bush (222), the pivot bush (222) being connected fixedly to the brake calliper yoke (22), and an inner contour of the pivot bush (222) being formed in such a way that the rotation about the at least one further rotational axis (R2) is possible, and that the radial forces are transmitted in the only one direction.

5. Apparatus according to one of the preceding claims, the second holder (220) and/or the second pin (120) being configured to ensure a transmission of force without elasticity in the case of a torque about the rotational axis (R1) and to ensure an elastic transmission of force in the case of a torque about the at least one further rotational axis (R2, R3).

6. Apparatus according to Claim 5, the second holder (220) and/or the second pin (120) having at least one elastic element, in order to ensure the elastic transmission of force in the case of the torque about the at least one further rotational axis (R2, R3).

7. Apparatus according to one of the preceding claims, the second holder (220) having a minimum clearance (Sz) in a translational direction of a radial direction of the second pin.

8. Apparatus according to Claim 7, the minimum free play (Sz) being a gap between the second pin (120) and the second holder (220).

9. Apparatus according to Claim 7 or Claim 8, the translational direction being perpendicular with respect to a connecting line between the rotational axis (R1) of the brake disc (60) and a centroid of the brake calliper (20), or lying along a connecting line between the first pin (110) and the second pin (120).

10. Apparatus according to one of the preceding claims, the second holder (220) having an elastomer element (226) which is configured to minimize a free play in a direction (x), in which the brake calliper (20) is rotationally locked, and to cushion the brake calliper (20).

11. Apparatus according to one of the preceding claims, the second holder (220) comprising an articulated element, and the articulated element being configured to make a translational movement along the second pin (220) possible, and to make a rotational movement about the at least one further rotational axis (R2, R3) possible.

12. Apparatus for fastening a brake calliper (20) to a frame (40) of a vehicle, the brake being configured to brake a brake disc (60) of the vehicle, which brake disc (60) can be rotated about a rotational axis (R1), with the following features:
means for the transmission of a torque to the frame (40), which torque, in the case of a braking operation of the brake disc (60), is transmitted to the brake calliper (20); and
means for pivoting the brake calliper (20) relative to the frame (40) in directions which are perpendicular with respect to the torque,
**characterized in that** the means for pivoting have a minimum gap, and a pivoting range in at least one pivoting direction is dependent on a size of the minimum gap, the minimum gap forming a minimum free play (Sz) between a pin (120) which is fixed on the frame (40) and a holder (220) for holding the brake calliper (20).

13. Brake calliper mounting system with:
a brake calliper (20); and
an apparatus according to one of Claims 1 to 12.

14. Rail vehicle with:
a frame (40);
a brake disc (60); and
a brake calliper mounting system according to Claim 13.

15. Rail vehicle according to Claim 14, the frame (40) being a bogie frame.

## Revendications

1. Dispositif de fixation d'un étrier (20) de frein à un châssis (40) d'un véhicule, l'étrier (20) de frein appartenant à un frein du véhicule pour freiner un disque (60) de frein tournant, comprenant les caractéristiques suivantes :
un premier axe (110) et un deuxième axe (120), qui sont reliés tous deux fixement au châssis (40) ;
une première fixation (210) pour maintenir l'étrier (20) de frein sur le premier axe (110) ; et
une deuxième fixation (220) pour maintenir l'étrier (20) de frein sur le deuxième axe (120),
dans lequel la combinaison de la première fixation (210) et de la deuxième fixation (220) est constituée pour maintenir l'étrier (20) de frein fixe en rotation dans un plan (x-z) perpendiculaire à l'axe (R1) de rotation du disque (60) de frein et pour permettre des rotations autour d'au moins un autre axe (R2, R3) de rotation, qui est perpendiculaire à l'axe (R1) de rotation du disque (60) de frein, la première fixation (210) étant immobile par rapport à la deuxième fixation (220), et
dans lequel la première fixation (210) est constituée pour transmettre au premier axe (110) toutes les forces radiales et **caractérisé en ce que** la deuxième fixation (220) est constituée pour transmettre au deuxième axe (120) des forces radiales seulement dans une direction.

2. Dispositif de fixation d'un étrier (20) de frein à un châssis (40) d'un véhicule, le frein étant constitué pour freiner un disque (60) de frein du véhicule pouvant tourner autour d'un axe (R1) de rotation, ayant les caractéristiques suivantes :
un premier axe (110) et un deuxième axe (120), qui sont reliés tous deux fixement au châssis (40) ; et
une première fixation (210) et une deuxième fixation (220), qui sont constituées pour maintenir l'étrier (20) de frein de manière correspondante sur le premier axe (110) et sur le deuxième axe (120), de manière à ce que l'étrier (20) de frein soit fixe en rotation dans un plan perpendiculaire à l'axe (R1) de rotation du disque (60) de frein et puisse tourner autour d'au moins un autre axe (R2, R3) de rotation, qui est perpendiculaire à l'axe (R1) de rotation du disque (60) de frein, dans lequel
la première fixation (210) entoure, au moins en partie, le premier axe (110) et peut se déplacer dans une direction (y) axiale le long du premier axe (110), et/ou la deuxième fixation (220) entoure, au moins en partie, le deuxième axe (120) et peut se déplacer dans une direction (y) axiale le long du deuxième axe (120),
dans lequel la première fixation (210) est constituée pour transmettre au premier axe (110) toutes les forces radiales, et **caractérisé en ce que** la deuxième fixation (220) est constituée pour transmettre au deuxième axe (120) des forces radiales seulement dans une direction.

3. Dispositif suivant la revendication 1 ou la revendication 2, dans lequel, à la fois la première fixation (210) et la deuxième fixation (220) sont des fixations sans barre d'appui.

4. Dispositif suivant l'une des revendications précédentes, dans lequel l'étrier (20) de frein comprend au moins une culasse (22) d'étrier de frein et la deuxième fixation (220) comprend au moins une douille (222) d'articulation, la douille (222) d'articulation étant reliée fixement à la culasse (22) de de l'étrier de frein et un contour intérieur de la douille (222) d'articulation est formé de manière à ce que la rotation autour du au moins un autre axe (R2) de rotation soit possible et de manière à ce que les forces radiales ne soient transmises que dans la une direction.

5. Dispositif suivant l'une des revendications précédentes, dans lequel la deuxième fixation (220) et/ou le deuxième axe (120) sont constitués pour assurer une transmission de force sans élasticité pour un couple autour de l'axe (R1) de rotation et une transmission de force élastique pour un couple autour du au moins un autre axe (R2, R3) de rotation.

6. Dispositif suivant la revendication 5, dans lequel la deuxième fixation (220) et/ou le deuxième axe (120) a au moins un élément élastique pour assurer la transmission de force élastique, lors du couple autour du au moins un autre axe (R2, R3) de rotation.

7. Dispositif suivant l'une des revendications précédentes, dans lequel la deuxième fixation (220) a un jeu (Sz) minimum dans une direction en translation d'une direction radiale du deuxième axe.

8. Dispositif suivant la revendication 7, dans lequel le jeu (Sz) minimum est un intervalle entre le deuxième axe (120) et la deuxième fixation (220).

9. Dispositif suivant la revendication 7 ou la revendication 8, dans lequel la direction en translation est perpendiculaire à une ligne de liaison entre l'axe (R1) de rotation du disque (60) de frein et un centre de gravité de l'étrier (20) de frein ou est suivant une ligne de liaison entre le premier axe (110) et le deuxième axe 120).

10. Dispositif suivant l'une des revendications précédentes, dans lequel la deuxième fixation (220) a un élément (226) élastomère, qui est constitué pour minimiser un jeu dans une direction (x), dans laquelle l'étrier (20) de frein est fixe en rotation, et pour suspendre l'étrier (20) de frein.

11. Dispositif suivant l'une des revendications précédentes, dans lequel la deuxième fixation (220) comprend un élément d'articulation et l'élément d'articulation est constitué pour rendre possible un déplacement en translation suivant le deuxième axe (220) et pour rendre possible un mouvement de rotation autour du au moins un autre axe (R2, R3) de rotation.

12. Dispositif de fixation d'un étrier (20) de frein à un châssis (40) d'un véhicule, le frein étant constitué pour freiner un disque (60) de frein du véhicule pouvant tourner autour d'un axe (R1) de rotation, ayant les caractéristiques suivantes :
des moyens de transmission au châssis (40) d'un couple, qui est transmis lors d'un freinage du disque (60) de frein à l'étrier (20) de frein ; et
des moyens pour faire pivoter l'étrier (20) de frein par rapport au châssis (40) dans des directions, qui sont perpendiculaires au couple,
**caractérisé en ce que** les moyens de pivotement ont au moins un intervalle minimum et une plage de pivotement dans au moins une direction de pivotement dépend de la grandeur de l'intervalle minimum, l'intervalle minimum formant un jeu (Sz) minimum entre un axe (120) fixé au châssis (40) et une fixation (220) de maintien de l'étrier (20) de frein.

13. Suspension d'étrier de frein comprenant :
un étrier (20) de frein ; et
un dispositif suivant l'une des revendications 1 à 12.

14. Véhicule ferroviaire comprenant :
un châssis (40) ;
un disque (60) de frein ; et
une suspension d'étrier de frein suivant la revendication 13.

15. Véhicule ferroviaire suivant la revendication 14, dans lequel le châssis (40) est un châssis de boggie.
